# EUROPÄISCHE PATENTANMELDUNG

(11) **EP 0 814 060 A2**
(43) Veröffentlichungstag der Anmeldung: **29.12.1997**
(21) Anmeldenummer: 97109333.1
(22) Anmeldetag: 10.06.1997
(51) Int. Cl.: C02F 1/66, C02F 1/461

(54) **Verfahren zur Anhebung des pH-Wertes saurer Wässer**

(30) Priorität: 17.06.1996 DE 19624023
(71) Anmelder: Verein für Kernverfahrenstechnik und Analytik Rossendorf e.V., 01474 Schönfeld-Weissig (DE)
(72) Erfinder: Friedrich, Hans-Jürgen, 01833 Stolpen (DE); Knappik, Reinhard, Dr., 01277 Dresden (DE)

(57) **Zusammenfassung**

Die Erfindung betrifft ein Verfahren zur Sanierung saurer, ggf. schwermetallhaltiger Abwässer, vorzugsweise Gruben-, Halden- und Bergbauabwässer, sowie insbesondere auch saurer Wässer aus Tagebaurestlochgewässern. Mit der Erfindung soll eine Anhebung des pH mit gegenüber klassischen Verfahren drastisch reduziertem Eintrag von chemischen Neutralisations- und Fällungsmitteln in das zu reinigende Wasser ermöglicht werden. Gleichzeitig soll die Konzentration von gelösten Schwermetallen oder anderen Schadstoffen reduziert werden.

Erfindungsgemäß erfolgt dies dadurch, daß das zu reinigende saure Wasser einer Elektrolyse in geteilten Elektrolysezellen, unter Verwendung eines porösen Separators oder einer Ionenaustauschermembran zur Trennung der Zellen, unterzogen wird, wobei das zu behandelnde Wasser nur in den Katodenraum eingespeist wird, während im Anodenraum eine Lösung ein- oder zweiwertiger Anionen der Elemente der 6. oder 7. Gruppe des PSE eingesetzt wird.

Im Katodenprozeß werden dabei Wasserstoffionen entladen, und im Wasser gelöster Sauerstoff wird unter Verbrauch von Wasserstoffionen reduziert.
Um im elektrochemischen Gesamtsystem eine Nettoabsenkung des pH zu erreichen, muß durch verfahrenstechnische Maßnahmen eine Unterdrückung bzw. Auskopplung der anodischen Sauerstoffentwicklung erreicht werden, die als wesentliche Gegenreaktion zu den an der Katode ablaufenden Reaktionen in einer Elektrolyseapparatur im Normalfall zu erwarten ist. Im vorliegenden Fall wird dies mit der Durchführung der Elektrolyse in von porösen Separatoren bzw. von Ionenaustauschermembranen geteilten Elektrolysezellen bei Kopplung der katodischen Prozesse in der Elektrolyseapparatur mit anodischen Prozessen zur Oxidation von Halogenid- oder Sulfationen oder aber zur Oxidation von Wasser erreicht. In der Nettoreaktion der Elektrolyse ergibt sich damit, daß effektiv Säure aus dem zu behandelnden Wasser entfernt wird.

## Beschreibung

Die Erfindung betrifft ein Verfahren zur Sanierung saurer, ggf. schwermetallhaltiger Abwässer, vorzugsweise Gruben-, Halden- und Bergbauabwässer, sowie insbesondere auch saurer Wässer aus Tagebaurestlochgewässern.

Wesentlicher Bestandteil der bekannten Verfahren zur Sanierung saurer Tagebaurestseen bzw. saurer Sümpfungs-, Gruben- oder Haldensickerwässer ist die Zugabe von neutralisierend wirkenden Mitteln, vorzugsweise kalkhaltiger Produkte wie Branntkalk, gemahlener Kalkstein oder Dolomit bzw. Kalkmilch zu dem zu sanierenden Gewässer. Die Dosierung der Neutralisationsmittel gestaltet sich insbesondere in großen Wasserkörnern, wie sie Tagebaurestseen des Kohlebergbaus darstellen, schwierig. Zur Erzielung des erwünschten Sanierungseffektes ist die Zugabe sehr großer Mengen an Neutralisationsmittel notwendig, die einerseits mit sekundären Umweltschäden bei der Gewinnung, der Verarbeitung und dem Einsatz der Rohstoffe verbunden ist, andererseits bei ihrer Anwendung den Effekt einer unerwünschten zusätzlichen Aufsalzung der zu sanierenden Gewässer aufweisen. Der bisher bekannte Einsatz der Neutralisationsmittel beschränkt sich auf die Behandlung von Sümpfungs-, Gruben- und Haldensickerwässern. Versuche zur Behandlung der versauerten Wasserkörper von Tagebaurestseen schlugen bisher fehl [C. Hänsel, Umweltgestaltung in der Bergbaulandschaft, Abhandlungen der Sächsischen Akademie der Wissenschaften zu Leipzig, Band 57, Heft 3, Berlin 1991 ].
Um einen Kubikmeter Wasser aus einem Tagebaurestsee mit einem pH von ca. 2,5 zu neutralisieren, ist bei stöchiometrischem Umsatz die Zugabe von 110 g Calciumhydroxid erforderlich. Im Wasser der Tagebaurestseen sind außerdem erhebliche Mengen an Eisen, Aluminium und Mangan gelöst, die bei einem Anstieg des pH ausgefällt werden. Die Ausfällung ist mit der Freisetzung weiterer Wasserstoffionen verbunden, so daß in Abhängigkeit von der konkreten chemischen Zusammensetzung tatsächlich erheblich größere Mengen an Neutralisationsmittel zugesetzt werden müssen. Die Basenkapazität der Wässer erreicht dadurch selbst bei einem pH-Wert von 3 Werte von 10 mMol/l und mehr. Die Wasservolumina der Tagebaurestseen liegen häufig in der Größenordnung von mehreren Mio. bis mehreren 100 Mio. Kubikmeter, so daß die theoretisch notwendige Einsatzmenge an Neutralisationsmittel leicht die Größenordnung von mehreren hunderttausend Tonnen je zu sanierendes Objekt erreichen kann. Es ist klar, daß ein Neutralisationsmitteleinsatz in dieser Größenordnung enorme technische, ökologische und ökonomische Probleme aufweisen würde.
Weitere praktisch anwendbare Verfahren zur Behandlung der letztgenannten Wasserkörper sind bisher unbekannt.

Im Bereich der Reinigung industrieller, landwirtschaftlicher und kommunaler Abwässer werden elektrochemische Prozesse eingesetzt, die sich jedoch auf die Entfernung von Schwermetallen oder den Abbau bestimmter Wasserschadstoffe - z.B. die Verminderung des Chemischen/Biologischen Sauerstoffbedarfs durch Elektrolyse konzentrieren.
Bei Verfahren, die auf der katodischen Abscheidung von Metallen oder anodischen Oxidation von organischen Fremdstoffen beruhen, sinkt infolge der anodischen Gegenreaktion während der Elektrolyse der pH-Wert der Lösung ab, was der hier vorliegenden Aufgabenstellung direkt entgegen steht.
Die Prozesse sind darüberhinaus vorwiegend auf die Aufbereitung kleiner Wasservolumina ausgerichtet und werden insbesondere im Bereich der Reinigung von Abwässern aus der Galvanotechnik zur Anwendung gebracht.

Verschiedene andere Vorschläge beruhen auf dem Einsatz von Opferanoden, die jedoch für die vorliegenden Probleme der Aufbereitung sehr großer Wassermengen nicht effektiv einsetzbar sind.

Mit der Erfindung soll nun ein Verfahren gefünden werden, das die Sanierung von sauren Tagebaurestseen sowie die Aufbereitung von sauren Sümpfungs- und Haldensickerwässern durch Anhebung des pH mit gegenüber klassischen Verfahren drastisch reduziertem Eintrag von chemischen Neutralisations- und Fällungsmitteln in das zu reinigende Wasser ermöglicht.

Gleichzeitig soll die Konzentration von gelösten Schwermetallen oder anderen Schadstoffen reduziert werden.

Die Lösung der Aufgabe erfolgt erfindungsgemäß, indem das zu reinigende saure Wasser einer Elektrolyse entsprechend dem in den Patentansprüchen dargestellten Verfahren unterzogen wird.
Im Katodenprozeß werden dabei Wasserstoffionen entladen, und im Wasser gelöster Sauerstoff wird unter Verbrauch von Wasserstoffionen reduziert. In welchem Umfang die beiden Prozesse zur pH-Wert-Anhebung beitragen, hängt von den konkreten Konzentrationsverhältnissen in dem aufzubereitenden Wasser ab.
Um im elektrochemischen Gesamtsystem eine Nettoabsenkung des pH zu erreichen, muß durch verfahrenstechnische Maßnahmen eine Unterdrückung bzw. Auskopplung der anodischen Sauerstoffentwicklung erreicht werden, die als wesentliche Gegenreaktion zu den an der Katode ablaufenden Reaktionen in einer Elektrolyseapparatur im Normalfall zu erwarten ist. Im vorliegenden Fall wird dies mit der Durchführung der Elektrolyse in von porösen Separatoren bzw. von Ionenaustauschermembranen geteilten Elektrolysezellen bei Kopplung der katodischen Prozesse in der Elektrolyseapparatur mit anodischen Prozessen zur Oxidation von Halogenid- oder Sulfationen oder aber zur Oxidation von Wasser erreicht. In der Nettoreaktion der Elektrolyse ergibt sich damit, daß effektiv Säure aus dem zu behandelnden Wasser entfernt wird.

Vorteilhaft eignet sich zur Durchführung des Prozesses die anodische Oxidation von Halogenidionen, die Oxidation von Sulfationen und die Oxidation von Wasser unter Bildung von Schwefelsäure, wobei z.B. in einem Elektrolyseprozeß, in dem in der Katodenreaktion Protonen entladen bzw. durch die Reduktion von Sauerstoff verbraucht werden und im Anodenprozeß Cloridionen zu Chlor oxidiert werden, in der Nettoreaktion der Elektrolyse Salzsäure aus dem behandelten Wasser entfernt wird. Bei Einsatz von Sulfatlösungen als Anolyten kann unter Bildung von Wasserstoff und Peroxoverbindungen in der Nettoreaktion Schwefelsäure aus dem Wasser entfernt werden.

Im Unterschied zu den bekannten Sanierungsverfahren weist das erfindungsgemäß vorgeschlagene elektrochemische Verfahren zunächst den allgemein bekannten Vorteil auf, daß Art und Umfang der ablaufenden Umsetzungen über die Parameter Stromstärke und Spannung des Elektrolysestromes sehr genau gesteuert werden können und ein Zusatz von Chemikalien zum reagierenden Stoffsystem nicht erforderlich ist. Dies ist gegenüber herkömmlichen Sanierungstechniken sowohl hinsichtlich der Dosierung des Neutralisationsmittels als auch hinsichtlich des Stoffeinsatzes an sich ein wesentlicher Vorteil. Das im Wasserkörper vorhandene Stoffpotential selbst kann hier vorteilhaft zur Erzielung des Sanierungseffektes genutzt werden. Dies geschieht auf nachvollziehbare Weise, in dem katodisch die Entladung von Wasserstoffionen und die Reduktion von gasförmig gelöstem Sauerstoff erfolgt. Auf diese Weise werden im katodischen Teilprozeß der Elektrolyse Wasserstoffionen aus dem Wasserkörper entfernt bzw. Hydroxidionen erzeugt. Im anodischen Teilprozeß der Elektrolyse können Halogenidionen, die natürlicherweise im zu sanierendem Gewässerkörper vorliegen, und die durch den Separator wandern oder durch die Ionenaustauschermembran transportiert werden, entladen werden. Da sich die elektrochemisch abgeschiedenen Gase in einem nachgeschalteten Reaktor zu Halogenwasserstoffsäure rekombinieren lassen, läßt sich das Verfahrensprinzip auch als eine Abtrennung von Säure aus dem Gewässerkörper durch Elektrolyse auffassen.

Da erfindungsgemäß das zu behandelnde Wasser nur in den vom Anodenraum getrennten Katodenraum eingespeist wird, wird verhindert, daß an der Anode entladenes Chlor in nennenswerter Konzentration in den durch Elektrolyse aufbereiteten Katolyten zurück gelangt. Diese Verfahrensweise läßt sich dahingehend nutzbringend anwenden, in dem das bei der Elektrolyse gebildete Chlor aus dem Anodenprozeß aufbereitet und einer kommerziellen Nutzung zugeführt wird. Eine Möglichkeit der Weitervearbeitung besteht in der Umsetzung der Elektrolyseprodukte Wasserstoff und Chlor zu Chlorwasserstoff. Wenn die Verwertung von Chlorwasserstoff bzw. Chlor auf Beschränkungen stößt, läßt sich diese durch Modifikationen des Verfahrens umgehen. Dabei wird der Prozeß der anodischen Chlorentwicklung durch Prozesse wie z.B. die elektrochemische Synthese von Hypochlorit oder Chlorat aus Chloriden, die Synthese von Persulfat aus Sulfaten oder die Erzeugung von Schwefelsäure ersetzt.

Das o.g. Verfahrensprinzip bewirkt bei Verwendung von Sulfatlösungen als Anolyt, daß aus jeweils zwei Molen Sulfationen ein Mol Persulfat gebildet wird. Da in der Folge der Anolyt an Sulfationen verarmt, werden Sulfationen aus dem Katolyten in den Anodenraum einwandern, so daß insgesamt Schwefelsäure aus dem Katolyten entfernt wird.

Als besonderer Vorteil des erfindungsgemäßen Verfahrens kann der Anodenprozess zur gezielten Gewinnung von Halogenwasserstoffsäure, Oxohalogenverbindungen, Persulfat, Wasserstoffperoxid oder Schwefelsäure genutzt werden. Dieser Vorteil läßt sich insbesondere durch den Einsatz von Abfallsolen aus technischen Prozessen, salzhaltigen Grundwässern oder sonstigen Salzlösungen im Anodenprozeß des elektrochemischen Sanierungsprozesses als Refinanzierungshilfe der Sanierungskosten ausbauen.
Die im Katodenprozeß durch Fällung gewinnbaren Schwermetalle sowie der entstehende Wasserstoff können ebenfalls einer weiteren Verwendung zugeführt werden.

Nachfolgend soll die Erfindung anhand von Ausführungsbeispielen näher erläutert werden.

### Ausführungsbeispiel 1

Wasser aus einem Tagebaurestloch mit nachfolgend beschriebener chemischer Zusammensetzung sollte aufbereitet werden:
- pH der Lösung:: 2,8
- Leitfähigkeit bei 298K:: 2,28 mS/cm
- Eisen, gelöst:: 43,0 mg/l
- davon Eisen(III):: 38,5 mg/l
- Mangan:: 4,7 mg/l
- Aluminium:: 11,5 mg/l
- Sauerstoff, gelöst:: 7,8 mg/l
- Sulfat:: 1050 mg/l

Dieses Wasser wurde in den Katodenraum der Elektrolysezelle eingefüllt. Als Anolyt diente Natriumchloridlösung in einer Konzentration von 1 Mol/l. Anoden- und Katodenraum besaßen das gleiche Volumen und waren durch ein keramisches Diaphragma mit einer mittleren Porenweite von 0,001 mm voneinander getrennt. Als Katode diente ein Eisenblech, als Anodenmaterial ein Titanblech, das mit Platin-Iridium in der Zusammensetzung 90% Platin und 10% Iridium überzogen war. Der Abstand zwischen Katode und Anode betrug in den Experimenten 15-30 mm. Legt man an die Elektroden eine Gleichspannung von 4 bis 6 Volt an, so läßt sich nach einiger Zeit katodisch zunächst die Entstehung von Wasserstoff beobachten. Nach einiger Zeit wird in der Nähe der Katode Eisenhydroxid ausgefällt und mit den von der Katode abreißenden Gasbläschen an die Oberfläche des Elektrolyten transportiert. Dieser Effekt kann genutzt werden, um Eisenverbindungen selektiv aus dem belasteten Wasser abzutrennen. Verbleibt des Fällungsprodukt im System, so ist nach einiger Zeit eine Aggregation der Partikel zu größeren Teilchen festzustellen, die schließlich zum Boden der Zelle sinken und dort abgetrennt werden können. Bei Anwendung hoher katodischer Stromdichten kann Eisen auch als Metall abgeschieden werden. Im Anodenraum wird parallel dazu Chlorid zu Chlor, Hypochlorit und Chlorat oxidiert, welche nach Abtrennung und Aufbereitung einer Weiterverwertung zugeführt werden können.
Während der Elektrolyse ist zunächst ein langsamer, später eine rascher Anstieg des pH im Katodenraum zu beobachten. Welcher pH im Katodenraum am Ende des Prozesses erreicht werden kann, hängt von der Verweilzeit ab. Im beschriebenen Beispiel wurde nach einigen Stunden Elektrolysedauer im Katolyten ein pH von 7,3 festgestellt. Die Stromausbeute der Elektrolyse in Bezug auf die primäre Wasserstoffionenkonzentration lag bei 33%.

### Ausführungsbeispiel 2

In weiteren Versuchen wurden die Versuchsbedingungen gegenüber dem Ausführungsbeispiel 1 insoweit modifiziert, als bei sonst identischer Versuchsanordnung als Katode ein Platin-Iridiumbeschichtetes Titanblech und als Anode ein Platindraht von 1 mm Durchmesser Verwendung fanden. Als weiterer Unterschied zum Ausführungsbeispiel 1 ist der Einsatz von 1 molarer Ammoniuninhydrogensulfatlösung als Anolyt hervorzuheben, wobei zu Demonstrationszwecken wiederum gleiche Volumina an Katolyt bzw. Anolyt eingesetzt wurden.

Elektrolysiert man die Lösungen bei einer Zellspannung von 4-6 Volt, läßt sich ohne weiteres ein End-pH von 7,3 im Katolyten erreichen. Die Stromausbeute beträgt im vorliegenden Fall 70%. Da Katolyt und Anolyt in getrennten Kreisläufen geführt werden, bereitet es keine größeren Schwierigkeiten, Ammoniumpersulfat aus dem Reaktionssystem abzutrennen und einer weiteren Verwertung zuzuführen.

Beide Ausführungsbeispiele lassen ohne weiteres den Abbruch der Elektrolyse zu einem früheren Zeitpunkt als beim Erreichen eines pH-Wertes von 7,3 zu. Dies kann vor allem dann vorteilhaft sein, wenn es aufgrund der sich im Verlauf des Elektrolyseprozesses vermindernden Leitfähigkeit des Katolyten notwendig ist, Elektrolysespannungen von 10 Volt und mehr aufzuwenden, um einen befriedigenden Durchsatz bei der Elektrolyse zu erzielen. In solchen Fällen wird die Elektrolyse solange betrieben, bis eine Erhöhung des pH um etwa ein bis zwei Einheiten im Katolyten erfolgt ist.
Anschließend erfolgt die weitere Neutralistion des Katolyten in einem separaten Mischreaktor durch die Zudosierung von Neutralisationsmitteln wie Kalkmilch, Natronlauge o.ä., wobei jedoch nur noch maximal 20% des ursprünglich vorhandenen Säureäquivalentes zu neutralisieren sind.

### Ausführungsbeispiel 3

Wasser aus einem Tagebaurestsee, mit den chemischen Analyseparametern
- pH: 2,72
- Fe(III): 92 mg/l
- Al(III): 27 mg/l
wurde in einer Durchflußzelle bei einer spezifischen Belastung der Elektroden von 4 bis 12 Liter zu reinigendem Wasser je dm² Elektrodenfläche und Stunde bei einer Elektrolysespannung von 2,5 - 5,5 Volt elektrolysiert. Als Katode diente das in den Ausführungsbeispielen 1 und 2 bereits genannte Material, während als Anodenmaterial ein mit Platin-Iridium beschichtetes Streckmetall aus Titan zum Einsatz gelangte. Der Anolyt bestand entweder aus einer 1 molaren Kochsalzlösung, aus einer 1 molaren Ammoniumhydrogensulfatlösung oder aus verdünnter Schwefelsäure. Genauso ist an dieser Stelle der Einsatz von Abfallsolen oder salinen Grundwässern möglich

Als Separatormaterialien kamen poröse Polyethylenfolien oder sulfatselektive Anionenaustauschermembranen zum Einsatz. Im stationären Betrieb der Elektrolyse stellen sich je nach angelegter Zellspannung und eingestelltem Durchfluß pH-Werte im aus der Elektrolysezelle abfließenden Katolyten von 3,7 bis 7,5 ein. Gelöste Schwermetalle werden unter diesen Bedingungen im Katolyten ausgefällt und können durch die üblichen Trennprozesse vom aufbereiteten Wasser separiert werden. Die elektrische Leitfähigkeit des aufbereiteten Wassers fällt von ursprünglich 2,8 mS/cm auf Werte von 1,5 mS/cm und niedriger ab. Dies ist ein sicheres Zeichen dafür, daß ein erheblicher Teil der im aufzubereitetenden Wasser gelösten Inhaltsstoffe während der Elektrolyse ausgefällt wird. Der im aufbereiteten Wasser erreichte pH-Wert blieb auch längere Zeit nach Abschluß der Elektrolyse stabil. Mit dem dargestellten Verfahren kann z.B. ein mittlerer Tagebaurestsee mit einem Volumen von ca. 10 Mio m³ Wasser, das einen pH von 2,9 und eine Basenkapazität von 5mMol/l aufweist in einem ca. 5 Jahre andauernden Prozeß mit einem Aufwand von ca. 1,3 kWh / m³ durch eine pH-Wert- Anhebung auf einen pH von 6 saniert werden, wenn eine Elektrolyseanlage mit ca. 200 m² Katodenfläche zum Einsatz gelangt.

### Ausführungsbeispiel 4

Schwefelsaures Grubenwasser aus einem Erzbergwerk, das durch einen pH-Wert von 2,15, eine elektrolytische Leitfähigkeit von 3,4 mS/cm sowie durch ein Basenäquivalent von 19,2 mMol/l (bis pH=7) charakterisiert ist, wurde einer Elektrolyse unterzogen. Dabei gelangte eine Elektrolysezelle zum Einsatz, deren Katode aus einem galvanisch mit einer Silber-Palladium-Legierung beschichteten Kohlenstoffgrundgerüst von 1dm² geometrischer Oberfläche gefertigt war, während als Anode ein Platinnetz mit den äußeren Abmessungen von 1*1 dm² diente. Als Anolyt gelangten 100 ml einer Lösung zum Einsatz, die 2 Mol/l Ammoniumsulfat, 0,3 Mol/l Ammoniumhydrogensulat und 10 g/l Ammoniumthiocyanat enthielt.

Die Trennung von Katoden- und Anodenraum erfolgte durch eine Anionenaustauschermembran des Typs 'ACS'.

Die Aufbereitung des Grubenwassers erfolgte, indem jeweils 4 Liter der vorgenannten Lösung solange bei einer Durchflußgeschwindigkeit von 0,3-0,5 l/min den Katodenraum der Elektrolysezelle durchströmten, bis der gewünschte End-pH-Wert erreicht wurde. Die Elektrolyse erfolgte bei einer Stromstärke von 1 A und einer Zellspannung zwischen 4,4 und 7,5 V, wobei die höheren Zellspannungen regelmäßig bei höheren Umsätzen (bezogen auf die ursprüngliche Basenkapazität der Lösung) auftraten.

Die bei der Aufbereitung des Grubenwassers durch Elektrolyse erzielten Umsätze und Stromausbeuten sind in Tabelle 1 dargestellt. Weiterhin werden auch die Parameter pH-Wert und elektrolytische Leitfähigkeit angegeben, die den Aufbereitungseffekt belegen.

**Tabelle 1**

| Ergebnisse bei der Aufbereitung von Grubenwasser | | | | | |
|---|---|---|---|---|---|
| Parameter | Ausgangsparameter | Wert der Parameter bei bzw. nach der Aufbereitung | | | |
| Umsatz % | 0 | 38 | 75 | 82 | 93 |
| Stromausbeute % | entf. | 70 | 72 | 69 | 62 |
| pH-Wert | 2,15 | 2,85 | 4,19 | 4,48 | 5,9 |
| Leitfähigkeit mS/cm | 3,40 | 2,48 | 2,23 | 2,20 | 2,16 |

Zusätzlich läßt sich die Aufbereitung des Grubenwassers auch mittels der in Tabelle 2 angegebenen Analysenparameter nachweisen:

**Tabelle 2**

| Analysenparameter von unbehandeltem und aufbereitetem Grubenwasser | | |
|---|---|---|
| Analysenparameter | unbehandelte Lösung Konzentration in mg/l | aufbereitete Lösung Konzentration in mg/l |
| Chlorid | 89,30 | 54,40 |
| Sulfat | 1935,00 | 1120,00 |
| Fluorid | 3,42 | 0,67 |
| Aluminium | 46,30 | 0,29 |
| Eisen (gesamt) | 204,20 | 4,92 |
| Thorium | 0,21 | <0,01 |
| Uran | 12,40 | 0,28 |
| Zink | 27,40 | 17,80 |

Die in der Spalte 3 der Tabelle 2 angegebenen Analysenergebnisse beziehen sich auf einen pH-Wert von 5,9 im durch Elektrolyse aufbereiteten und nachfolgend filtrierten Grubenwasser. Der Vergleich mit den in der Spalte 3 angebenen Werten zeigt, daß neben der beabsichtigten Anhebung des pH-Wertes auch eine Reihe unerwünschter oder sogar toxischer bzw. radioaktiver Inhaltsstoffe des Grubenwassers vollständig oder zumindest teilweise aus der Lösung entfernt werden können.

Die Abtrennung des Thoriums erfolgt nahezu quantitativ, die von Aluminium, Eisen, und Uran zu >97,5% der ursprünglich in der Lösung vorhandenen Stoffmenge. Aus den Untersuchungsergebnissen geht ferner hervor, daß neben den Kationen auch bedeutende Anteile speziell von Fluorid- und Sulfationen aus der aufbereiteten Lösung entfernt worden sind.

Im Anodenprozeß wird bei dieser Variante des Verfahrens Ammoniumperoxidisulfat hergestellt.

Der energetische Aufwand zur Aufbereitung der Zirkulationslösung liegt im hier beschriebenen Fall bei 4,6 kWh/m³.

## Patentansprüche

1. Verfahren zur Anhebung des pH-Wertes saurer Wässer, insbesondere Gruben-, Halden- und Bergbauabwässer, sowie saurer Tagebaurestlochgewässer, dadurch gekennzeichnet, daß diese einer Elektrolyse in geteilten Elektrolysezellen, unter Verwendung eines porösen Separators oder einer Ionenaustauschermembran zur Trennung der Zellen, unterzogen werden, und das zu behandelnde Wasser nur in den Katodenraum eingespeist wird, während im Anodenraum eine Lösung ein- oder zweiwertiger Anionen der Elemente der 6. oder 7. Gruppe des PSE eingesetzt wird.

2. Verfahren nach Anspruch 1, dadurch gekennzeichnet, daß Katodenmaterialien mit geringer Überspannung für die Reduktion von Wasserstoff und Sauerstoff verwendet werden.

3. Verfahren nach Anspruch 2, dadurch gekennzeichnet, daß die Katode aus Elementen der Gruppen IVb, Vb, VIb, VIIb und VIIIb des Periodischen Systems der Elemente, ihren Legierungen oder Verbindungen untereinander oder aber mit anderen Elementen besteht.

4. Verfahren nach Anspruch 1, dadurch gekennzeichnet, daß Anodenmaterialien verwendet werden, die Oxidation von Halogenidionen, vorzugsweise Chloridionen, selektiv katalysieren, oder die hinsichtlich der Sauerstoffentwicklungsreaktion über eine katalytische Wirkung verfügen.

5. Verfahren nach Anspruch 4, dadurch gekennzeichnet, daß die Anode aus Platin, Platin-Iridium, Platin-Rhodium, Titan, versehen mit oxidischen Überzügen von Metallen der Gruppen IV, V, IIIb, IVb und VIIIb des periodischen Systems der Elemente einschließlich von Mischungen der Oxide, Graphit, Glaskohlenstoff oder Bleidioxid besteht.

6. Verfahren nach Anspruch 1, dadurch gekennzeichnet, daß die Elektroden als Bleche, Folien, Netze, Fasern, Streckmetall, oder Schüttungen der angegebenen Materialien ausgeführt sind.

7. Verfahren nach Anspruch 1, dadurch gekennzeichnet, daß der die Elektrolysezellen trennende Separator aus einer Ionenaustauschermembran bzw. aus porösem Glas, Keramik oder Kunststoffen besteht.

8. Verfahren nach Anspruch 1, dadurch gekennzeichnet, daß Gleichstrom mit einer Spannung von typischerweise 2-6 Volt eingesetzt wird.

9. Verfahren nach Anspruch 1, dadurch gekennzeichnet, daß die katodischen Prozesse der eigentlichen Wasseraufbereitung mit anodischen Prozessen zur Erzeugung von kommerziellen chemischen Produkten, wie Chlor, Chlorat, Hypochlorit, Brom, Bromat, Hypobromit, Jod, Jodat aus anorganischen Halogenidverbindungen, Persulfat aus Sulfaten, Wasserstoffperoxid und Schwefelsäure gekoppelt werden.

10. Verfahren nach Anspruch 1 und/oder 10, dadurch gekennzeichnet, daß zur Erzeugung von Halogenen oder Oxohalogenverbindungen im Anodenprozeß des elektrochemischen Sanierungsprozesses Abfallsolen aus technischen Produktionsprozessen, Grundwässer oder sonstige technisch erzeugte oder natürlich vorkommende saline Wässer eingesetzt werden.

11. Verfahren nach Anspruch 1, dadurch gekennzeichnet, daß zur Vervollständigung der Sanierung der Elektrolyseprozeß mit einer chemischen Nachfällung gekoppelt wird.
